# EUROPÄISCHE PATENTSCHRIFT

(11) **EP 2 085 326 B1**
(45) Veröffentlichungstag und Bekanntmachung des Hinweises auf die Patenterteilung: **31.10.2012**
(21) Anmeldenummer: 08002068.8
(22) Anmeldetag: 04.02.2008
(51) Int. Cl.: B65D 88/06, B65D 88/76, B65D 90/10, E03B 3/03, B65D 90/00, B65D 88/00, B65D 88/02, B65D 90/12, B29C 65/02

(54) **Verfahren zum Herstellen eines Kunststoff-Tanks und Kunststoff-Tank**
Method for producing a plastic tank and plastic tank
Procédé de fabrication d'un réservoir en plastique et réservoir en plastique

(43) Veröffentlichungstag der Anmeldung: 05.08.2009
(73) Patentinhaber: Graf Plastics GmbH, 79331 Teningen (DE)
(72) Erfinder: Graf, Otto P. Dipl.-Kfm., 79331 Teningen (DE)
(74) Vertreter: Grünecker, Kinkeldey, Stockmair & Schwanhäusser

(56) Entgegenhaltungen:
- EP-A- 1 533 252
- EP-A- 1 801 035
- WO-A-2007/121506
- DE-A1- 10 018 310
- FR-A- 2 862 886
- GB-A- 2 039 980
- JP-A- 10 174 985

## Beschreibung

Die Erfindung betrifft ein Verfahren gemäß Oberbegriff des Patentanspruchs 1 und einen Kunststoff-Tank gemäß Oberbegriff des Patentanspruchs 5.

Bei Einsatz eines Kunststoff-Tanks als im Boden installierte Klär- oder Abscheideanlage ist zumindest eine innere, Kammern voneinander separierende Trennwand erforderlich. Bei Herstellung des Tanks nach einem Rotationsgussverfahren wird die Trennwand einrotiert, was jedoch hinsichtlich der Gestaltfestigkeit und Materialverteilung erhebliche Probleme mit sich bringt. Bekannt ist es auch, die Trennwand nachträglich durch einen offenen Tankdom einzubringen und im Tank zu verschweißen oder den fertigen Tank lokal aufzuschneiden, die vorgefertigte Trennwand beispielsweise von unten einzufügen, abzudichten, und den Tank wieder zu verschweißen. Zum Erzielen einer stabilen Trennwand sind die bekannten Verfahren mit enormem Form- und Arbeitsaufwand verbunden, der solche Tanks unzweckmäßig verteuert. An der Trennwand ergeben sich dennoch herstellungsbedingt statische Probleme. Es ist nämlich im Einsatz notwendig, eine Kammer zeitweise zu entleeren, während die benachbarte Kammer befüllt bleibt. Die geleerte Kammer kann über längere Zeit leer bleiben, so dass Flüssigkeitsdruck die Trennwand in Richtung zur leeren Kammer außerordentlich hoch belastet, und deren Gestaltfestigkeit und Einbindung in den Tank diesen Belastungen nicht widerstehen kann so dass es zum Bruch oder einer bleibenden Verformung kommt. Solche Kunststoff-Tanks mit großen Fassungsvermögen sind schwierig zu transportieren und zu handhaben.

Aus FR-A-28 62 886 sind ein Verfahren und ein nach dem Verfahren hergestellter Kunststoff-Tank bekannt, bei dem Gleichteil-Tankkörper so gefügt werden, dass jeweils zwei ebene durchgehenden Begrenzungswände aneinanderliegen und eine Trennwand zwischen Kammern des Tanks bilden. Jede Querwand steht in Einbaulage des Tanks in etwa vertikal und quer zur Längsachse. Für jede einzelne Kammer ist ein einzelner ganzer Tankdom im Tankkörper geformt.

Aus EP-A-15 33 252 sind ein Verfahren und ein nach dem Verfahren hergestellter Kunststoff-Tank bekannt, dessen Tankkörper allgemein zylindrisch mit quer liegenden kreisrunden ebenen Begrenzungswänden ausgebildet und stumpf aneinanderstoßend gefügt sind. Jeder Kammer ist ein eigener ganzer Tankdom in einer außen liegenden Begrenzungswand zugeordnet, der sich im Abstand von den beiden ebenen Begrenzungswänden befindet.

Aus WO-A-2007/121506 sind ein Verfahren und ein nach dem Verfahren hergestellter Kunststoff-Tank mit mehreren quer zur Längsrichtung orientierten, verrippten ebenen Begrenzungswänden bekannt, die stumpf aneinandergelegt sind. Jeder Tankkörper weist für seine Kammer einen eigenen ganzen Tankdom auf.

Aus EP-A-18 01 035 ist ein einstückiger Kunststoff-Tank bekannt, der durch innen liegende, integral eingeformte Trennwände in zwei oder drei Kammern unterteilt ist, wobei den vorgesehenen Kammern ein gemeinsamer einstückig angeformter Tankdom zugeordnet ist, in den ein Aufsatz einsteckbar ist. Der Tank hat ein Fassungsvermögen zwischen 500 und 5.000 L. Bei großem Fassungsvermögen sind der Transport und die Handhabung des Kunststoff-Tanks schwierig.

Der Erfindung liegt die Aufgabe zugrunde, ein Verfahren der eingangs genannten Art sowie einen nach dem Verfahren hergestellten Kunststoff-Tank anzugeben, die ein Konzept ermöglichen, mit dem die eingangs geschilderten Probleme vermieden und mit herstellungstechnisch und montagetechnisch geringem Aufwand im Bereich einer Trennwand zumindest ein Tankdom geschaffen wird.

Die gestellte Aufgabe wird mit den Merkmalen des Patentanspruchs 1 und den Merkmalen des Patentanspruchs 5 gelöst.

Bei dem Verfahren werden zumindest zwei Tankkörper, die gleiche oder verschieden große Gleichteil-Tankkörper sein können, so zu dem Tank gefügt, dass zumindest eine ebene Begrenzungswand eines Tankkörpers im Tank die Trennwand bildet. Die Gleichteil-Tankkörper können in derselben Form hergestellt werden, z. B. monolithisch, wobei sich die die spätere Trennwand bildende ebene Begrenzungswand formtechnisch mit hoher Stabilität ausbilden und stabil eingliedern lässt, um den sich im Betrieb ergebenden Anforderungen bei Einsatz des Tanks beispielsweise in einer Klär- oder Abscheideanlage gerecht zu werden. Auf diese Weise können Tanks baukastenartig unter Verwendung von Gleichteil-Tankkörpern mit beliebiger Kammeranzahl und stabilen Trennwänden zwischen den Kammern erstellt werden. Die gefügten Tankkörper können gegebenenfalls unterschiedliche Längen haben, um verschiedene Kammergrößen zu realisieren. Zur Erstellung des Tanks aus Gleichteil-Tankkörpern und/oder mit einem oder mehreren Mittelteil-Tankkörpern wird z. B. jeder Tankkörper mit wenigstens einem, z. B. zunächst verschlossenen, halben Tankdom in einer Begrenzungswand gefertigt, die zur die Trennwand im Tank bildenden ebenen Begrenzungswand orthogonal verläuft. Der halbe Tankdom ist an einer Seite von der ebenen Begrenzungswand begrenzt. Im Tank wird aus den halben, z. B. später geöffneten, Tankdomen jeweils ein beiden benachbarten Kammern gemeinsamer Tankdom, z. B. für einen beiden Kammern gemeinsamen, Aufsatz gebildet.

Der gefügte Tank zeichnet sich dadurch aus, dass die Trennwand durch die beiden entsprechend stabil gefertigten ebenen Begrenzungswände gebildet wird, ohne die Trennwand nachträglich einsetzen zu müssen. Die Begrenzungswand erfüllt zwei Funktionen, da sie in Einbaulage dort, wo sie an das Erdreich angrenzt, den Flüssigkeitsdruck und den Erddruck aufnimmt, hingegen als Trennwand variierenden Flüssigkeitsdruckkräften in beiden Kammern problemlos widersteht. Die Gestaltung der Begrenzungswand und deren Einbindung in den Tankkörper sind kostengünstig von vornherein im Hinblick auf beide Funktionen optimierbar. Da zwei ebene Begrenzungswände gemeinsam die Trennwand bilden, erhält die Trennwand unter anderem dadurch hohe Stabilität, dass sich die Begrenzungswände aneinander abstützen. Hierfür sind keine Zwischen-Bearbeitungsschritte erforderlich. Über den gemeinsamen, aus den halben Tankdomen gebildeten ganzen Tankdom ist nicht nur Zugang zum Inneren der Kammern möglich, sondern es kann ein Aufsatz montiert werden, in dem beispielsweise Ausstattungskomponenten für eine Klärfunktion untergebracht werden.

Nach einem weiteren Verfahrensmerkmal werden zwei im Wesentlichen zylindrische Gleichteil-Tankkörper mit einer ebenen Begrenzungswand an zumindest einem Zylinderende und ein allgemein zylindrischer Mittelteil-Tankkörper mit ebenen Begrenzungswänden an beiden Zylinderenden koaxial so zum Tank gefügt, dass aus den paarweise aneinanderliegenden ebenen Begrenzungswänden zwei Trennwände zwischen insgesamt drei Kammern des Tanks gebildet werden. Zweckmäßig sind die Gleichteil-Tankkörper und der Mittelteil-Tankkörper mit halben Tankdomen gefertigt, die beim Fügen jeweils einen zwei Kammern gemeinsamen Tankdom bilden. Auf diese Weise lässt sich ein Tank mit insgesamt drei Kammer und zwei Trennwänden und nur zwei Tankdomen erstellen. Dieses Prinzip lässt sich baukastenartig erweitern, falls mehr als drei Kammern benötigt werden. Ferner können unterschiedlich lange Gleichteil-Tankkörper bzw. unterschiedlich tiefe Mittelteil-Tankkörper wahlweise kombiniert werden, um unterschiedliche Kammergrößen zu erzielen. Auch kann jeder Tankkörper mindestens einen ganzen Tankdom aufweisen.

Um die Gestaltfestigkeit der durch die aneinanderliegenden ebenen Begrenzungswände konstituierten Trennwand zu erhöhen, ist bei einer weiteren Ausführungsform die ebene Begrenzungswand des Gleichteil-Tankkörpers oder des Mittelteil-Tankkörpers mit wenigstens einer durchgehenden Strukturierung, vorzugsweise mit mehreren vertieften Rinnen z.B. zum Einlegen von Versteifungsrohren, versehen. Über die später im Erdreich eingebetteten Versteifungsrohre werden von der jeweiligen ebenen Begrenzungswand auf den Versteifungskörper übertragene Lasten abgetragen, falls beispielsweise eine Kammer entleert wird und eine weitere nach wie vor befüllt sein sollte.

Bei einer zweckmäßigen Ausführungsform weisen die außen liegenden Begrenzungswände der Gleichteil-Tankkörper Versteifungsrippen auf, vorzugsweise senkrecht zur Zylinderachse des zylindrischen Tankkörpers verlaufende Rippen am Außenumfang bzw. Bogenrippen in bombierten Begrenzungswänden. Die Versteifungsrippen erhöhen die Gestaltfestigkeit auch der direkt mit dem Erdreich in Kontakt stehenden Begrenzungswände.

Zweckmäßig sind die Gleichteil-Tankkörper monolithische Rotationsguss-, Blasform- oder Spritzguss- bzw. Spritzpräge-Teile, die kostengünstig mit ausgeprägter Formvielfalt speziell in Großserien herstellbar sind.

Schließlich sind bei einer zweckmäßigen Ausführungsform, bei der die jeweilige Trennwand durch zwei aneinanderliegende ebene Begrenzungswände konstituiert wird, die Tankkörper so gefügt, dass die Gleichteil-Tankkörper miteinander mit den ebenen, aneinanderliegenden Begrenzungswänden wie auch jeweils die zwei halben Tankdome durch Spann- und/oder Zentrierelemente im Bereich der Trennwand und/oder durch in Fügerichtung wirkende, außen umfassende Spannmittel, wie Spanngurte, und/oder in Einbaulage des Tanks im Erdreich durch Bodendruckkräfte aneinandergehalten werden.

Ausführungsformen des Erfindungsgegenstandes werden anhand der Zeichnungen 4 bis 9 erläutert. Es zeigen:
- Fig. 1: eine Perspektivansicht eines vorbekannten aus zwei Gleichteil-Tankkörpern gefügten Kunststoff-Tanks,
- Fig. 2: eine Perspektivansicht der beiden Gleichteil-Tankkörper der Fig.1 vor dem Fügen,
- Fig. 3: eine schematische Längsschnittansicht zu den Fig. 1 und 2, wobei gestrichelt weitere modular erweiterte Varianten angedeutet sind,
- Fig. 4: eine Perspektivansicht einer Ausführungsform eines aus zwei Gleichteil-Tankkörpern gefügten Kunststoff-Tanks gemäß der Erfindung,
- Fig. 5: eine Perspektivansicht zu Fig. 4, der beiden Gleichteil-Tankkörper vor dem Fügen,
- Fig. 6: eine Perspektivansicht zu den Fig. 4 und 5, des einbaufertigen oder bereits ins Erdreich eingebauten Kunststoff-Tanks,
- Fig. 7: eine perspektivische Explosionsdarstellung einer weiteren Ausführungsform eines Kunststoff-Tanks gemäß der Erfindung vor dem Fügen bzw. Einbau,
- Fig. 8: eine Perspektivansicht einer weiteren Ausführungsform eines Kunststoff-Tanks gemäß der Erfindung mit drei Kammern, und
- Fig. 9: eine Seitenansicht des Tanks von Fig. 8 in einbaufertigem oder eingebautem Zustand.

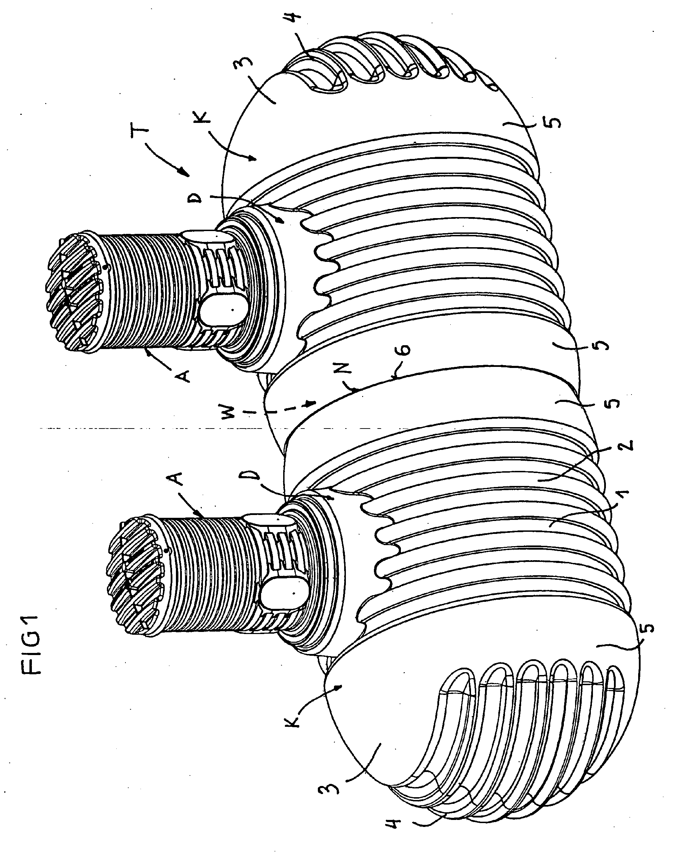

Ein in den Fig. 1 bis 3 gezeigter vorbekannter Kunststoff-Tank T, beispielsweise zur Verwendung als ins Erdreich eingebaute Klär- oder Abscheideanlage, ist mit zwei Kammern aus zwei Gleichteil-Tankkörpern K durch koaxiales Fügen der Tankkörper K erstellt, deren jeder allgemein zylindrisch mit nach außen zumindest teilweise bombierten, d.h. etwa halbkugeligen kappenförmigen, Endwänden 3 mit Bogenrippen 4 und einer angenähert zylindrischen Begrenzungswand 1 mit Umfangsrippen 2 geformt wurde.

Jeder Gleichteil-Tankkörper K ist beispielsweise ein Rotationsguss-, Blasform-, Spritzguss - oder Spritzpräge-Teil, vorzugsweise in monolithischer Ausführung. Obwohl in den Fig. 1 bis 3 gleich lange Gleichteil-Tankkörper K gezeigt sind, könnten deren Längen auch unterschiedlich sein.

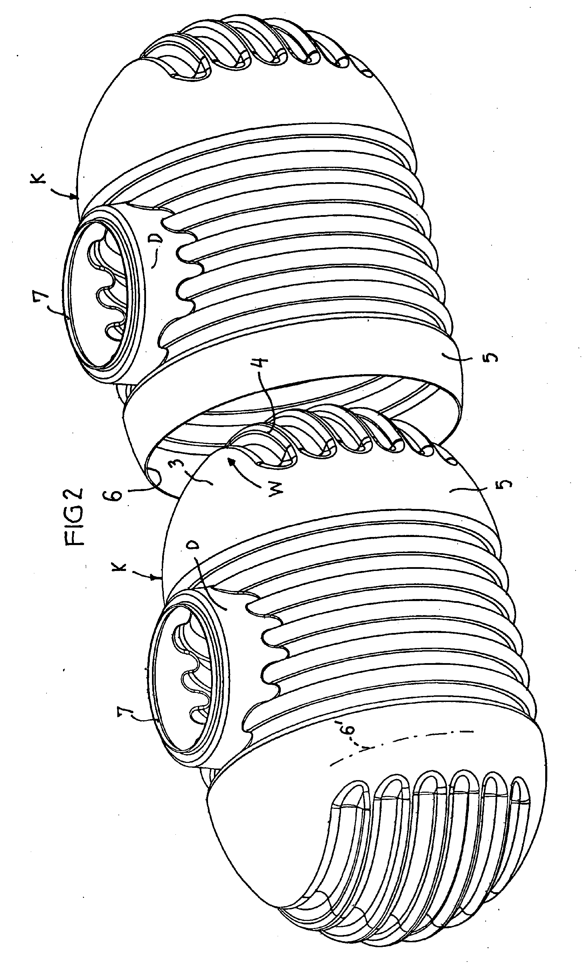

Zwischen den Bogenrippen 4 einer bombierten Begrenzungswand 3 und den Umfangsrippen 2 der zylindrischen Begrenzungswand 1 ist eine umlaufende glatte und angenähert sphärische Zone 5 geformt, in der eine in Fig. 2 strichpunktiert angedeutete Solltrennlinie 6' vorgesehen sein kann. An dieser Solltrennlinie ist beispielsweise der in Fig. 1 rechte Gleichteil-Tankkörper K seiner linken bombierten Begrenzungswand 3 durch einen Umfangsschnitt entledigt, so dass eine beispielsweise kreisrunde Öffnung 6 gebildet ist. In diese Öffnung 6 ist die rechtsseitige bombierte Begrenzungswand 3 des in Fig. 1 linken Gleichteil-Tankkörpers K eingesetzt und beim Fügen durch eine umlaufende Klebenaht oder Schweißnaht N fixiert und abgedichtet. Die in Fig. 1 rechtsseitige bombierte Begrenzungswand 3 des linken Gleichteil-Tankkörpers K bildet im Tank T eine Begrenzungswand W zwischen den beiden Kammern. Diese Begrenzungswand W ist dank der Kappenform und der Bogenrippen 4 außerordentlich gestaltfest und hoch belastbar mit der zylindrischen Begrenzungswand 1 verbunden. In jede zylindrischen Begrenzungswand 1 ist ein Tankdom D eingeformt, der beispielsweise zunächst verschlossen und vor dem Einsetzen eines Aufsatzes A geöffnet wird. Der Aufsatz A führt beispielsweise als Schacht bis zum Bodenniveau und kann Ausstattungsteile (nicht gezeigt) für eine Klärfunktion enthalten. In Fig. 1 sind in beiden Tankdomen D Aufsätze A installiert. Fig. 2 verdeutlicht, wie die beiden Gleichteil-Tankkörper K koaxial ineinander geführt werden, ehe die Klebenaht oder Schweißnaht N gebildet wird. Die beiden Tankdome D sind in Fig. 2 bereits freigelegt, wobei sie Öffnungsränder 7 für die später zu installierenden Aufsätze A haben.

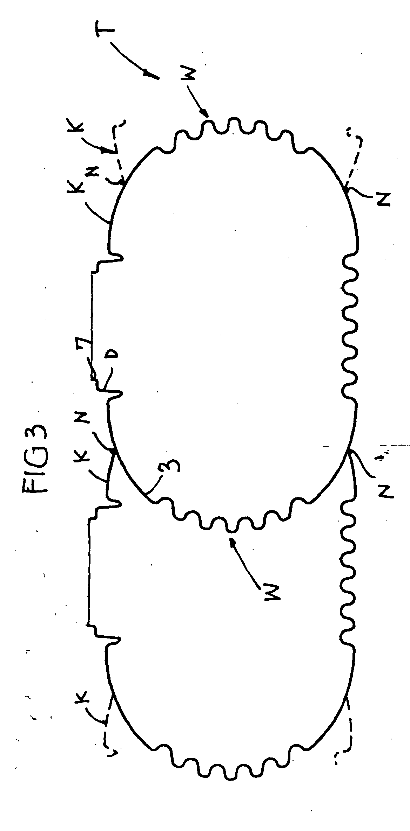

Fig. 3 verdeutlicht in einem schematischen Längsschnitt (Blickrichtung in Fig. 1 von hinten) den gefügten Kunststoff-Tank T von Fig. 1 aus den beiden Gleichteil-Tankkörpern K. Gestrichelt ist in Fig. 3 angedeutet, dass zur Erstellung eines Tanks mit mehr als zwei Kammern am rechten Ende und/oder am linken Ende ein weiterer Gleichteil-Tankkörper K hinzugefügt sein kann. Dieses Erstellungsprinzip des Tanks kann baukastenartig beliebig erweitert werden. Der jeweilige Mittelteil-Tankkörper besitzt entweder als die beiden Trennwände W beide bombierten Begrenzungswände 3, oder ist beider bombierter Begrenzungswände 3 entledigt, so dass dann Begrenzungswände 3 der äußeren koaxialen Tankkörper K die zwei Trennwände W bilden. Die Tankkörper K könnten unterschiedliche Längen haben.

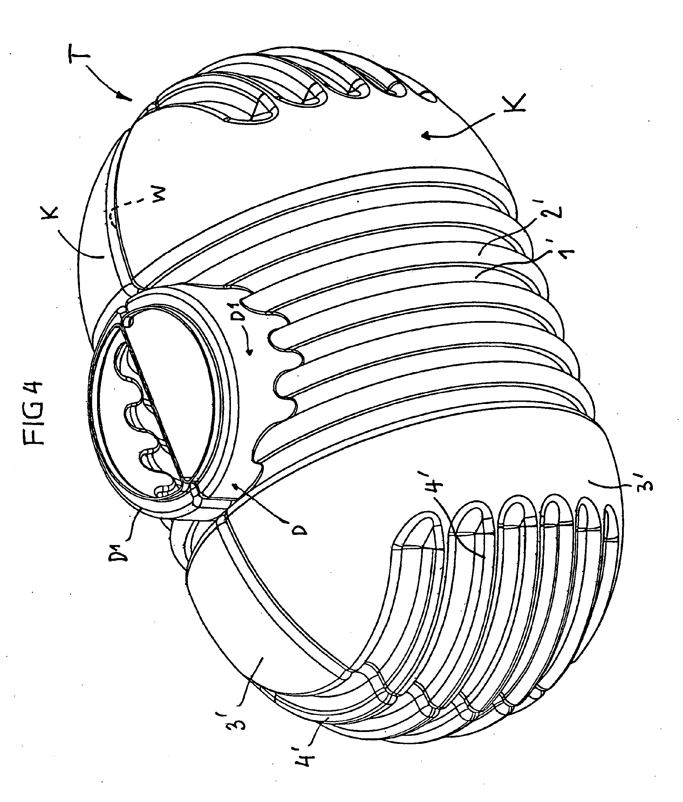

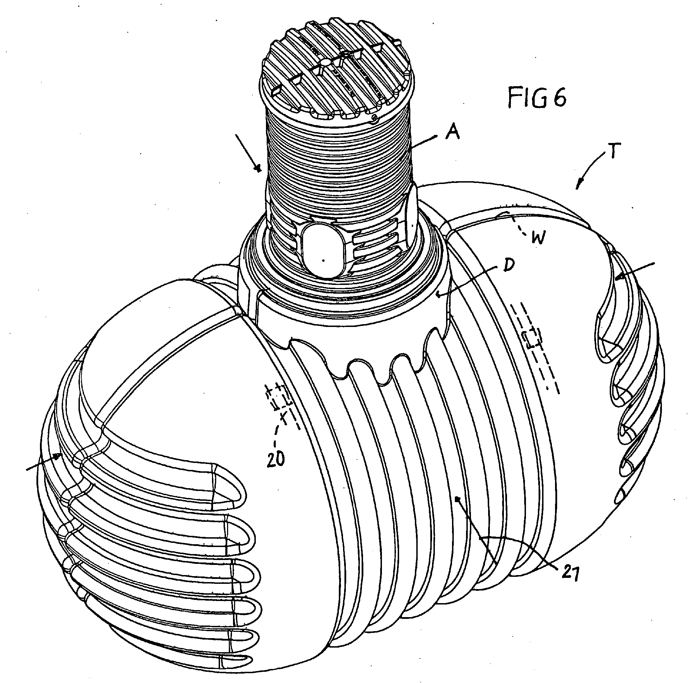

Der in den Fig. 4, 5 und 6 gezeigte Kunststoff-Tank T gemäß der Erfindung ist aus zwei Gleichteil-Tankkörpern K gefügt. Jeder Gleichteil-Tankkörper K besitzt eine in Längsrichtung durchgehende ebene Begrenzungswand 10, eine halbzylindrische Begrenzungswand 1' mit Umfangsrippen 2', eine zumindest teilweise bombierte Begrenzungswand 3' mit Bogenrippen 4', sowie einen halben Tankdom D1 in der halbzylindrischen Begrenzungswand 1', wobei der halbe Tankdom D1 an einer Seite durch die ebene Begrenzungswand 10 begrenzt wird. Beim Fügen der beiden Gleichteil-Tankkörper K zum Tank T werden die ebenen Begrenzungswände 10 aneinandergelegt und werden die beiden Gleichteil-Tankkörper K entweder beim Einbau durch den Druck des Erdreiches (Pfeile 21 in Fig. 6) und/oder durch außen aufgebrachte Spannmittel 20, wie Spanngurte, Spannbänder, oder Spanndrähte (Fig. 6) und/oder durch innenliegende Zentrier- und Spannelemente 11 in den ebenen Begrenzungswänden 10 selbst aneinandergehalten, so dass zwei ebene Begrenzungswände 10 in dem Tank T gemeinsam eine hier vertikale Längs-Trennwand W konstituieren und sich aneinander abstützen. Die beiden halben Tankdome D1 in Fig. 1 ergeben nach dem Fügen einen vollständigen Tankdom D, der durch die beiden ebenen Begrenzungswände 10 unterteilt sein kann. Auf den Tankdom D ist in Fig. 6 ein beiden Kammern gemeinsamer Aufsatz A aufgesetzt, der Ausstattungskomponenten für eine Klärfunktion enthalten kann.

Bei einer nicht gezeigten Alternative könnten die ebenen Begrenzungswände 10 auch miteinander verklebt oder verschweißt oder durch andere Verrastmittel aneinander fixiert sein.

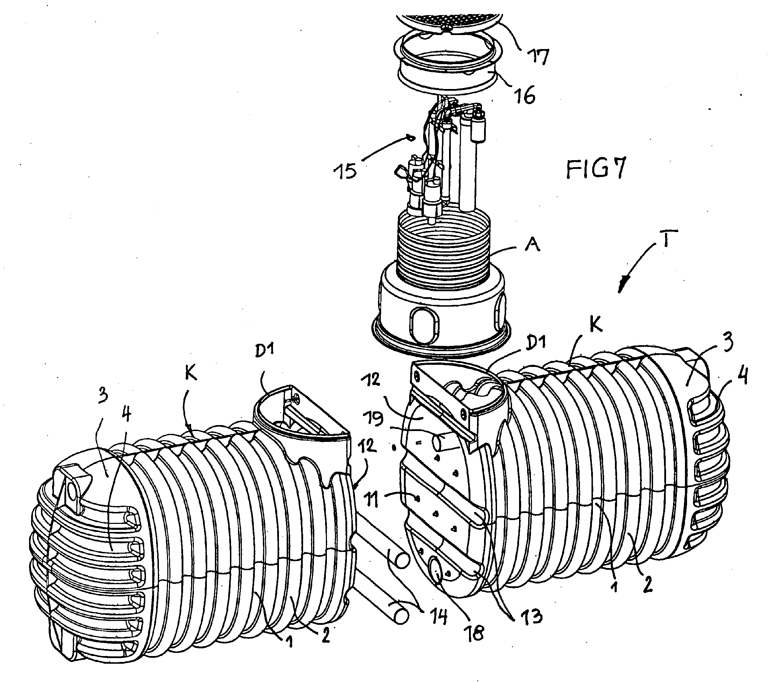

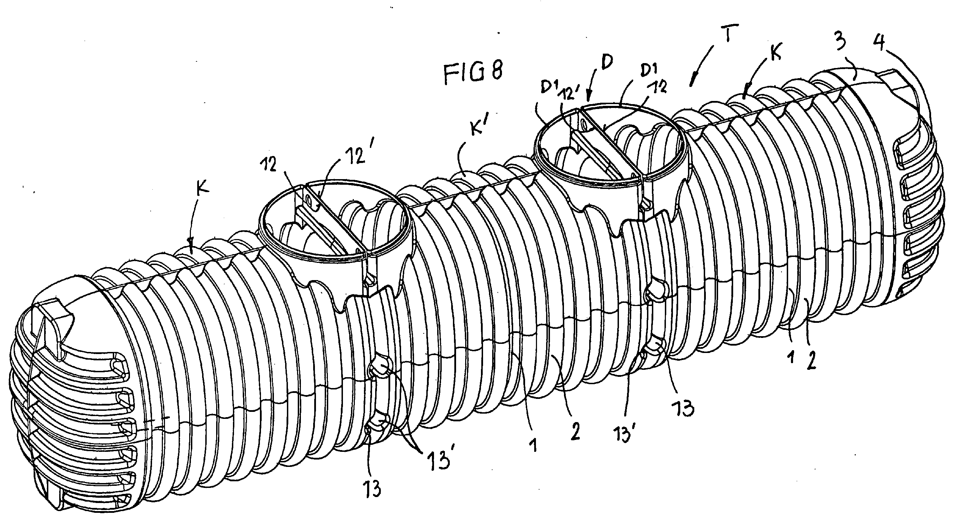

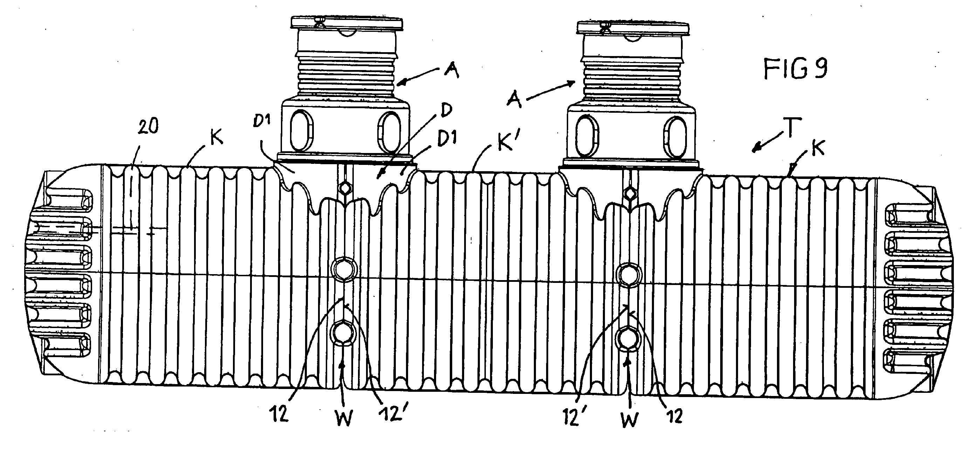

Die Ausführungsform des erfindungsgemäßen Kunststoff-Tanks in Fig. 7 unterscheidet sich von der der Fig. 4 bis 6 dadurch, dass zwei Gleichteil-Tankkörper K allgemein zylindrischer Gestalt mit zylindrischer Begrenzungswand 1 und Umfangsrippen 2, an einem Zylinderende einer bombierten Begrenzungswand 3 mit Bogenrippen 4 und am anderen Zylinderende einer ebenen Begrenzungswand 12 mit den aneinandergelegten ebenen Begrenzungswänden 12 koaxial gefügt sind. In jeder zylindrischen Begrenzungswand 1 ist ein halber Tankdom D1 eingeformt, der durch die ebene Begrenzungswand 12 begrenzt wird. In gefügtem Zustand (analog zu Fig. 8 und 9) bilden die beiden halben Tankdome D1 einen vollständigen Tankdom D für einen Aufsatz A, der beiden Kammern gemeinsam zugeordnet ist und Ausstattungskomponenten 15 für eine Klärfunktion sowie einen weiteren Aufsatz 16 und einen Deckel 17 aufweisen kann.

In Fig. 7 werden die beiden ebenen Begrenzungswände 12 beispielsweise unter Verwenden der Zentrier- oder Spannelemente 11 aneinandergehalten, oder/und mit in Fig. 9 angedeuteten Spannmitteln, wie Spanngurten 20, oder/und durch Druckkräfte 21 des Erdreichs nach Einbau des Tanks.

In den ebenen Begrenzungswänden 12 können Rohrverbindungen 19, Rohranschlüsse 18 und dgl. vorgeformt sein. Ferner können die ebenen Begrenzungswände 12 mit einer Strukturierung 13 versehen sein, beispielsweise jeweils mindestens einer halbrunden rinnenförmigen Vertiefung zum Einlegen von rohrförmigen Verankerungselementen 14, die sich in Einbaulage des Tanks mit dem Erdreich verzahnen und Belastungen abtragen. Die Strukturierungen 13 erhöhen ferner die Gestaltfestigkeit der ebenen Begrenzungswände 12.

Die beiden Tankkörper K in Fig. 7 können gleich lang sein. Es ist aber auch möglich, unterschiedlich lange Tankkörper K zu fügen, um unterschiedliche Kammergrößen zu erzielen. Die Trennwand W zwischen den Kammern wird durch die aneinanderliegenden ebenen Begrenzungswände 12 konstituiert.

Die Fig. 8 und 9 zeigen eine weitere Ausführungsform eines erfindungsgemäßen Kunststoff-Tanks T mit drei Kammern, die durch zwei Trennwände W voneinander getrennt sind, deren jede durch zwei aneinanderliegende ebene Begrenzungswände 12, 12' konstituiert wird.

In Fig. 8 sind beispielsweise zwei Gleichteil-Tankkörper K mit jeweils einer ebenen Begrenzungswand 12 koaxial mit einem Mittelteil-Tankkörper K' gefügt, der eine zylindrische Begrenzungswand 1 mit Umfangsrippen 2 und an beiden Zylinderenden jeweils eine ebene, zur Zylinderachse senkrecht verlaufende Begrenzungswand 12' besitzt. Der Mittelteil-Tankkörper K' kann gleich lang oder kürzer oder länger als die anderen gleich oder verschieden langen Gleichteil-Tankkörper K sein, um unterschiedliche Kammergrößen realisieren zu können. An beiden Zylinderenden des Mittelteil-Tankkörpers K' ist hier je ein halber Tankdom D1 eingeformt, der mit dem anderen halben Tankdom D1 des Tankkörpers K einen vollständigen Tankdom D, jeweils gemeinsam zwei Kammern zugeordnet, bildet. Die aufeinander ausgerichteten Strukturierungen 13, 13' definieren quer durchlaufende, offene Kanäle zum Einbringen in Fig. 7 angedeuteter Verankerungselemente 14 zur Lastabtragung und Abstützung im Erdreich.

Das Erstellungsprinzip des Tanks T in Fig. 8 kann beliebig erweitert werden, z.B. mit mehr als einem Mittelteil-Tankkörper K', falls mehr als drei Kammern gewünscht sein sollten.

Fig. 9 zeigt in Seitenansicht den Tank T von Fig. 8 mit montierten Aufsätzen A und beispielsweise angebrachten Spannmitteln 20, wie Spanngurten.

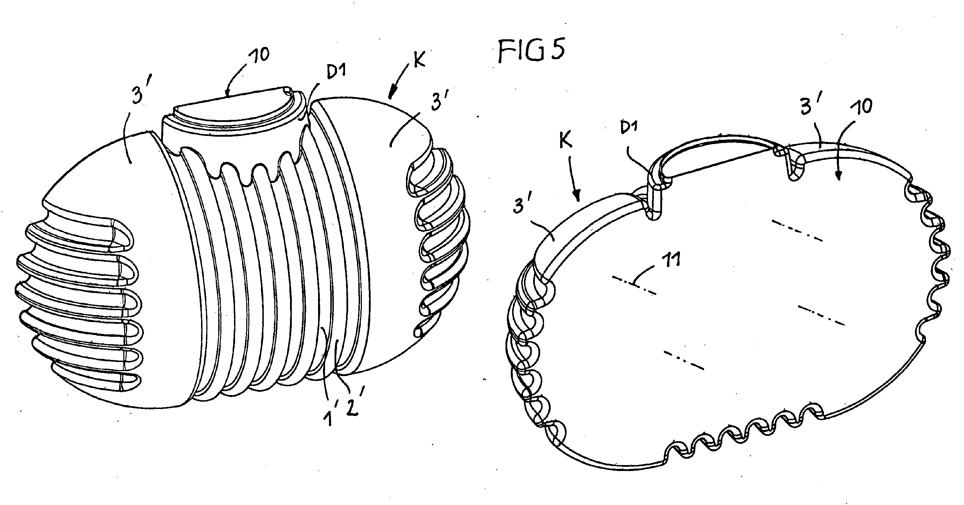

Das Erstellungsprinzip des Tanks T der Fig. 8 und 9 kann in analoger Weise auch bei dem Tank der Fig. 4 bis 6 realisiert werden. Bei dieser nicht gezeigten Ausführungsform wird zwischen die beiden Gleichteil-Tankkörper K der Fig. 4 und 5 ein Mittelteil-Tankkörper eingesetzt, der zwei annähernd zueinander parallele, ebene Begrenzungswände und zwei halbe Tankdome D1 aufweist. Der Mittelteil-Tankkörper kann so tief sein wie die Gleichteil-Tankkörper K, oder weniger tief oder tiefer, um unterschiedliche Kammervolumina realisieren zu können. Dieses Prinzip kann mit zwei oder mehr Mittelteil-Tankkörpern auf mehr als drei Kammern erweitert werden.

Allen Ausführungsformen ist gemeinsam, dass durch das Fügen nur von Gleichteil-Tankkörpern oder Gleichteil-Tankkörpern mit Mittelteil-Tankkörpern oder Gleichteil-Tankkörpern unterschiedlicher Längen bzw. Tiefen zwei ebene Begrenzungswände zweier Tankkörper im Tank eine Trennwand zwischen benachbarten Kammern definieren. Die zwei aneinanderliegenden ebenen Begrenzungswände stützen sich gegenseitig ab bzw. sind mit aussteifenden Strukturierungen versehen, so dass sie in der summarischen Wirkung sehr gestaltfest sind.

## Patentansprüche

1. Verfahren zum Herstellen eines zumindest eine Kammern separierende Trennwand (W) enthaltenden Kunststoff-Tanks (T), insbesondere für Klär- oder Abscheideanlagen, wobei zunächst mindestens zwei Gleichteil-Tankkörper (K) mit allseitigen Begrenzungswänden (1, 1', 3, 3', 10, 12, 12') einschließlich mindestens einer im Wesentlichen ebenen, durchgehenden Begrenzungswand (10, 12) gefertigt und die Gleichteil-Tankkörper (K) mit den ebenen Begrenzungswänden (10, 12) aneinanderliegend zu dem Tank (T) gefügt werden, bis die ebenen Begrenzungswände (10, 12) nach dem Fügen gemeinsam die Trennwand (W) bilden, **dadurch gekennzeichnet, dass** jeder Tankkörper (K) mit wenigstens einem halben Tankdom (D1) in einer Begrenzungswand (1, 1'), gefertigt wird, die zur ebenen Begrenzungswand (10, 12) orthogonal verläuft, wobei der halbe Tankdorn (D1) an einer Seite durch die ebene Begrenzungswand (10, 12) begrenzt wird, und dass beim Fügen der Tankkörper (K) zum Tank (T) jeweils aus zwei halben Tankdomen (D1) ein jeweils zwei Kammern gemeinsamer, ganzer Tankdom (D) gebildet wird.

2. Verfahren nach Anspruch 1, **dadurch gekennzeichnet, dass** in dem aus den zwei halben Tankdomen (D1) gebildeten, ganzen Tankdom (D) ein beiden Kammern gemeinsamer Aufsatz (A) angeordnet wird.

3. Verfahren nach Anspruch 1, **dadurch gekennzeichnet, dass** jeder Tankkörper (K) mit einem zunächst verschlossenen halben Tankdom (D1) gefertigt wird, und dass der aus zwei halben Tankdomen (D1) gebildete ganze Tankdom (D) nachträglich geöffnet und mit einem Aufsatz (A) bestückt wird.

4. Verfahren nach Anspruch 1, **dadurch gekennzeichnet, dass** zwei zylindrische Gleichteil-Tankkörper (K) jeweils mit zumindest einer endseitigen, ebenen Begrenzungswand (12) und ein zylindrischer Mittelteil-Tankkörper (K') mit ebenen Begrenzungswänden (12') an beiden Zylinderenden koaxial zum Tank (T) gefügt werden, und dass aus den paarweise aneinanderliegenden ebenen Begrenzungswänden (12, 12') und den halben Tankdomen (D1) zwei Trennwände (W) zwischen insgesamt drei Kammern des Tanks (T) und zwei jeweils zwei Kammern gemeinsame ganze Tankdome (D) gebildet werden.

5. Kunststoff-Tank (T), insbesondere für eine Klär- oder Abscheideanlage, mit wenigstens einer in Einbaulage des Tanks (T) im Wesentlichen senkrechten, Kammern separierenden Trennwand (W),
wobei der Tank (T) mit der zumindest einen Quer- oder Längs-Trennwand (W) aus zwei monolithischen Gleichteil-Tankkörpern (K) jeweils mit zumindest einer ebenen durchgehenden Begrenzungswand (10, 12) gefügt ist, wobei die zwei aneinandergelegten ebenen Begrenzungswänden (10, 12) die Trennwand (W) bilden
**dadurch gekennzeichnet,**
**dass** jeweils zwei durch die Trennwand (W) separierten Kammern ein gemeinsamer Tankdom (D) aus zwei halben Tankdomen (D1) in jeweils einer zur ebenen Begrenzungswand (10, 12) orthogonalen Begrenzungswand (1, 1') des Gleichteil-Tankkörpers (K) zugeordnet ist.

6. Kunststoff-Tank nach Anspruch 5, **dadurch gekennzeichnet, dass** der halbe Tankdom (D1) an einer Seite durch die ebene Begrenzungswand (10, 12) begrenzt ist.

7. Kunststoff-Tank nach Anspruch 5, **dadurch gekennzeichnet, dass** die ebene Begrenzungswand (12) des Gleichteil-Tankkörpers (K) wenigstens eine durchgehende Strukturierung (13), vorzugsweise mehrere vertiefte Einlegerinnen für Verankerungskörper (14), aufweist.

8. Kunststoff-Tank nach wenigstens einem der vorhergehenden Ansprüche 5 bis 7, **dadurch gekennzeichnet, dass** die Begrenzungswände (1', 1, 3) der Gleichteil-Tankkörper (K) Versteifungsrippen (2, 2', 3, 3') aufweisen, vorzugsweise in etwa senkrecht zu einer Zylinderachse in einer Zylinderbegrenzungswand (1, 1') verlaufende Rippen (2) bzw. Bogenrippen (4) in einer bombierten Begrenzungswand (3, 3').

9. Kunststoff-Tank nach wenigstens einem der Ansprüche 5 bis 8, **dadurch gekennzeichnet, dass** die Gleichteil-Tankkörper (K) monolithische Rotationsguss-, Blasform-, Spritzguss- oder Spritzpräge-Teile sind.

10. Kunststoff-Tank nach wenigstens einem der Ansprüche 5 bis 9, **dadurch gekennzeichnet, dass** in Einbaulage des Tanks (T) die Gleichteil-Tankkörper (K) in Fügerichtung mit den aneinanderliegenden ebenen Begrenzungswänden (10, 12, 12') miteinander durch Spann- und/oder Zentrieretemente (11) im Bereich der Trennwand (W) und/oder durch außen umfassende Spannmittel (20) und/oder durch Bodendruckkräfte (21) gefügt sind.

## Claims

1. Method for producing a plastic tank (T) which contains at least one separation wall (W) separating chambers, in particular for sewage plants or separation installations, according to which method firstly at least two common part tank bodies (K) are produced which have boundary walls (1, 1', 3, 3', 10, 10', 12, 12') at all sides inclusive at least one planar, continuous boundary wall (10, 12), and according to which method the common part tank bodies (K) are connected such that the planar boundary walls (10, 12) abut each other until the planar boundary walls (10,1 2) after being connected commonly form a separation wall (W), **characterised in that** each tank body (K) is produced with at least one half tank dome (D1) within a boundary wall (1, 1'), which boundary wall (1, 1') extends orthogonally with respect to the planar boundary wall (10, 12), wherein the half tank dome (D1) is bounded at one side by the planar boundary wall (10,1 2), and that when connecting the tank body (K) to the tank (T) a full tank dome (D) is formed respectively from two half tank domes (D1), which full tank dome (D) is common to respective two chambers.

2. Method according to claim 1, **characterised in that** an insert (A) is arranged in the full tank dome (D) formed from the two half tank domes (D1), which insert is common to both chambers.

3. Method according to claim 1, **characterised in that** each tank body (K) is produced firstly with a closed half tank dome (D1), and that the full tank dome (D) formed from the two half tank domes (D1) is opened and thereafter is equipped with an insert (A).

4. Method according to claim 1, **characterised in that** two cylindrical common part tank bodies (K) and one cylindrical intermediate part tank body (K') are coaxially connected to the tank (T), each cylindrical common part tank body (K) having at least one planar boundary wall (12) at an end side, the cylindrical intermediate part tank body (K') having planar boundary walls (12') at both cylinder ends, and that two separation walls (W) are formed in total between three chambers of the tank (T) from the pairwise abutting planar boundary walls (12, 12'), and that two full tank domes (D) are formed from the half tank domes (D1), which full tank domes (D) respectively are common to the respective two chambers.

5. Plastic tank (T), in particular for a sewage plant or a separation installation, comprising at least one separation wall (W) separating chambers, which separation wall (W) is substantially perpendicular in installation position of the tank (T)
wherein the tank (T) including the at least one lateral or longitudinal separation wall (W) is connected from two monolithic common part tank bodies (K) each having at least one planar continuous boundary wall (10, 12), the abutting planar boundary walls (10, 12) forming the separation wall (W),
**characterised in that**
a common full tank dome (D) consisting of two half tank domes (D1) formed within a boundary wall (1, 1') of the common part tank body (K) respectively within a boundary wall (1, 1') is commonly associated to two chambers separated by the separation wall (W), the boundary wall (1, 1') extending orthogonally with respect to the planar boundary wall (10, 12).

6. Plastic tank according to claim 5, **characterised in that** the half tank dome (D1) is bound at one side by the planar boundary wall (10, 12).

7. Plastic tank according to claim 5, **characterised in that** the planar boundary wall (12) of the common part tank body (K) comprises at least one continuous structure (13), preferably several recessed insertion grooves for anchoring bodies (14).

8. Plastic tank according to at least one of the preceding claims 5 to 7, **characterised in that** the boundary walls (1', 1, 3) of the common part tank body (K) comprise stiffening ribs (2, 2', 4), preferably ribs (2) or arcuate ribs (4) in a bossed boundary wall (3, 3'), the ribs extending within a cylinder boundary wall (1, 1') substantially perpendicular to the cylinder axis.

9. Plastic tank according to at least one of the claims 5 to 8, **characterised in that** the common part tank bodies (K) are monolithic parts which are rotation cast, blow moulded, injection moulded, or injection moulded and stamped.

10. Plastic tank according to at least one of the claims 5 to 9, **characterised in that** in installation position of the tank (T) the common part tank bodies (K) are connected with each other in connecting direction of the mutually abutting planar boundary walls (10, 12, 12') by tensioning and/or centring elements (11) arranged within the region of the separation wall (W) and/or by exteriorly surrounding tensioning means (20) and/or by soil pressure forces (21).

## Revendications

1. Procédé pour fabriquer un réservoir en matière plastique (T) contenant au moins une cloison (W) séparant des chambres, en particulier pour des installations d'épuration ou de séparation, étant précisé qu'au moins deux corps de réservoir (K) identiques sont tout d'abord produits, avec des parois de délimitation de tous les côtés (1, 1', 3, 3', 10, 12, 12') y compris au moins une paroi de délimitation continue (10, 12) globalement plane, et les corps de réservoir (K) identiques sont assemblés pour former le réservoir (T), en étant appliqués l'un contre l'autre avec les parois de délimitation (10, 12), jusqu'à ce que les parois planes (10, 12) forment conjointement la cloison (W), après assemblage, **caractérisé en ce que** chaque corps de réservoir (K) est produit avec au moins un demi-dôme de réservoir (D1) dans une paroi de délimitation (1, 1') qui est orthogonale par rapport à la paroi de délimitation plane (10, 12), étant précisé que le demi-dôme de réservoir (D1) est délimité sur un côté par la paroi de délimitation (10, 12), et **en ce que** lors de l'assemblage des corps de réservoir (K) pour former le réservoir (T), un dôme de réservoir entier (D) commun à deux chambres est formé à chaque fois à partir de deux demi-dômes (D1).

2. Procédé selon la revendication 1, **caractérisé en ce qu'**une pièce rapportée (A) commune aux deux chambres est disposée dans le dôme de réservoir entier (D) formé des deux demi-dômes de réservoir (D1).

3. Procédé selon la revendication 1, **caractérisé en ce que** chaque corps de réservoir (K) est produit avec un demi-dôme de réservoir (D1) tout d'abord fermé, et **en ce que** le dôme de réservoir entier (D) formé de deux demi-dômes de réservoir (D1) est ouvert par la suite et garni d'une pièce rapportée (A).

4. Procédé selon la revendication 1, **caractérisé en ce que** deux corps de réservoir cylindriques (K) identiques présentant chacun au moins une paroi de délimitation plane (12) située côté extrémité, et un corps de réservoir central cylindrique (K') avec des parois de délimitation planes (12') aux deux extrémités du cylindre sont assemblés coaxialement pour former le réservoir (T), et **en ce qu'**à partir des parois de délimitation planes (12, 12') appliquées par paires et des demi-dômes de réservoir (D1) sont formés deux cloisons (W) entre trois chambres du réservoir (T), au total, et deux dômes de réservoir entiers (D) communs, chacun, à deux chambres.

5. Réservoir en matière plastique (5) pour une installation d'épuration ou de séparation, avec au moins une cloison (W) qui est globalement verticale, dans la position de montage du réservoir, et qui sépare les chambres,
étant précisé que le réservoir (T) avec la ou les cloisons transversales ou longitudinales (W) est assemblé à partir de deux corps de réservoir identiques monolithiques (K) qui présentent chacun au moins une paroi de délimitation continue (10, 12) globalement plane, et que les deux parois de délimitation planes (10, 12) appliquées l'une contre l'autre forment la cloison (W),
**caractérisé en ce qu'**à deux chambres séparées par la cloison (W) est associé à chaque fois un dôme de réservoir commun (D) formé de deux demi-dômes de réservoir (D1) dans une paroi de délimitation (1, 1') du corps de réservoir identique (K) orthogonale par rapport à la paroi de délimitation plane (10, 12).

6. Réservoir en matière plastique selon la revendication 5, **caractérisé en ce que** le demi-dôme de réservoir (D1) est délimité sur un côté par la paroi de délimitation plane (10, 12).

7. Réservoir en matière plastique selon la revendication 5, **caractérisé en ce que** la paroi de délimitation plane (12) du corps de réservoir identique (K) présente au moins une structuration continue (13), de préférence plusieurs rainures d'insertion creusées pour des corps d'ancrage (14).

8. Réservoir en matière plastique selon l'une au moins des revendications 5 à 7, **caractérisé en ce que** les parois de délimitation (1', 1, 3) des corps de réservoir identiques (K) présentent des nervures de renforcement (2, 2', 3, 3), de préférence des nervures (2) qui s'étendent dans une paroi de délimitation cylindrique (1, 1') à peu près perpendiculairement à un axe de cylindre, ou des nervures courbes (4) dans une paroi de délimitation bombée (3, 3').

9. Réservoir en matière plastique selon l'une au moins des revendications 5 à 8, **caractérisé en ce que** les corps de réservoir identiques (K) sont des pièces monolithiques produites par moulage par rotation, par soufflage, par moulage par injection ou par injection-compression.

10. Réservoir en matière plastique selon l'une au moins des revendications 5 à 9, **caractérisé en ce que** dans la position de montage du réservoir (T), les corps de réservoir (K) sont assemblés dans le sens d'assemblage, avec les parois de délimitation planes (10, 12, 12') appliquées les unes contre les autres, grâce à des éléments de serrage et/ou de centrage (11) dans la zone de la cloison (W) et/ou grâce à des moyens de serrage (20) qui les enserrent sur l'extérieur et/ou grâce à des forces de pression du sol (21).
